# EUROPEAN PATENT SPECIFICATION

(11) **EP 1 994 907 B1**
(45) Date of publication and mention of the grant of the patent: **13.10.2010**
(21) Application number: 07010034.2
(22) Date of filing: 21.05.2007
(51) Int. Cl.: A61C 1/08, A61C 8/00

(54) **Try-in implant**
Versuchsimplantat
Implant d'essai fonctionnel

(43) Date of publication of application: 26.11.2008
(73) Proprietor: Straumann Holding AG, 4002 Basel (CH)
(72) Inventor: Lussi, Jost, 8006 Zürich (CH); Zettler, Marc, 79539 Lörrach (CH)
(74) Representative: Schaad, Balass, Menzl & Partner AG

(56) References cited:
- US-A- 5 208 845
- US-A1- 2007 111 156

## Description

The present invention relates to a try-in implant for verifying position and angulation of a pilot hole.

When installing dental implants, the positioning of the implant is extremely important to obtain a good aesthetic and functional result. The positioning of the implant to a large extent determines the choice of prosthetic components. In order to provide guidance for the surgeon during the installation of an implant, various types of so-called surgical guide rails have traditionally been used. These guide rails are mainly to be produced under laboratory conditions and can be made in a number of different designs. As aids during the surgical intervention it is also possible to use so-called directional sensors.

A try-in implant for verifying the location and angulation of a pilot hole is for example known from US-A-2007/0111156.

US 5,208,845 discloses a radiographic depth gauge for positioning dental implants in a jaw bone. The gauge is formed of a material, which is x-ray visible, and is an elongated member with distance markings. The gauge both shows the depth and angulation of the drill hole relative to other holes and existing dentition.

US 5,842,859 discloses an indication device for marking and forming one or more attachment points for one or more fixtures, which can be fitted into a receiving hole in which it bears via a bearing part. At least one indicating part is interconnected with the protruding part and has a free end extending away from the existing hole, where a location of the new hole to be used as an attachment point is established at a position substantially adjacent to an exterior surface of the free end of the indicating part.

However, the devices known up to now have the disadvantage that the surgeon has no visual impression of the dental prosthesis after implantation.

Therefore, it was a problem of the present invention to provide a try-in implant which indicates the dental prosthesis and which is easy and safe to handle.

The problem is solved by a try-in implant according to claim 1. Further preferred embodiments are subject of the dependent claims .

Said try-in implant comprises a body portion to be received in a pilot hole, a neck portion formed above said body portion, whereby said neck portion has a sufficient length to project through mucosal tissue above said pilot hole, and an attachment portion formed above said neck portion. Said attachment portion comprises a crown-like cap which is mounted on the attachment portion by a snap fit assembly.

Said try-in implant indicates the exact geometry of the implant's prosthetic portion together with the mounted crown. Due to the optical identity or similarity of the try-in implant and the tooth prosthesis, meaning the final implant and the mounted crown, the surgeon has during the surgical intervention a visual impression of the situation after implantation and restoration. A mounted crown can be rudimentary minimal (a crown framework) or like the final crown (a final porcelain veneering crown of average/generic shape). This enables an easier decision about the implant to be selected. Possible implants are one-part implants or two-part implants, they may have a straight or angulated mounting part and the length and/or diameter of the implants to be selected may also be determined.

The facial-lingual and mesial-distal, corona-apical and apical-incisal position as well as the distance to adjacent teeth and implants can be verified with a try-in implant according to the present invention. Functional and aesthetic long-term results can be predicted due to the use of such a try-in implant.

The try-in implant can be obtained by injection molding.

According to the present invention the crown-like cap is a separate component which is mounted on the attachment portion, by a snap fit assembly. Here, it is possible to mount different forms of crown-like caps on the attachment portion in order to determine the optimal shape of the crown.

In a further embodiment of the present invention the crown-like cap comprises a handle to ensure easy and safe handling of said try-in implant. The handle is preferable integrated on the top of the crown-like cap. The handle on the crown-like cap ensures that the try-in implant can easily be inserted in the pilot hole, that means the first receiving hole or drill hole, by hand or by tweezers without being lost in the patient's mouth, thereby ensuring a safe handling.

In a further embodiment of the present invention the handle is an integral part of the crown-like cap by at least partly gripping the surface of the crown-like cap to ensure that the try-in implant can not slip away during the handling procedure in the patient's mouth.

In another preferred embodiment of the present invention the handle or the crown-like cap comprises an opening for the prevention of aspiration. A thread or floss may be inserted through the opening and held outside a patient's mouth. In addition, the thread or floss can be used to assist in removing the try-in implant.

Depending on the pilot hole it may be necessary to select an implant with a straight or an angled abutment. Due to the fact, that the try-in implant according to the present invention exists with a straight or angled attachment portion the surgeon may have a visual impression of both implant types. Therefore, the selection of the optimal implant is easier.

Preferably, the try-in implants have the same diameters as the implants. That means that that the body portion of the try-in implant according to the present invention has a diameter from 1.0 to 8.0 mm, preferably consisting of the group of 2.2 mm, 3.0 mm, 3.5 mm, 4.2 mm, 5 mm and 5.5 mm. Especially preferred are those having a diameter from 2.0 to 3.0 mm, for example 2.2mm and 2.8 mm.

In order to predict the optimal length of the implant, the body of try-in implant may have different length, preferably 6 mm and 8 mm. It is also possible that the try-in implants comprise a height indicator, designed with horizontal or lacuna markings. Such a height indicator makes it possible to decide whether an adjustment of the pilot hole is necessary, respectively which implant length has to be selected.

Preferably the try-in implants according to the present invention have, depending on their diameter and size, a specific color, which serves as color code. Alternatively they have a tooth-like colour to support the visual impression.

In one embodiment of the present invention the try-in implant comprises mainly a metal selected from the group consisting of titanium, zirconium, stainless steel preferably titanium or stainless steel. Alternatively the implants comprise an alloy of metals selected from the group consisting of cobalt, chromium, titanium, zirconium, niobium, hafnium or tantalum. Most preferred are 316 stainless steel, Ti6Al4V, Ti6Al7Nb and a Cr-Co alloy.

In another embodiment of the present invention the try-in implant is made of a synthetic material. The synthetic material is selected from the group consisting of ceramic such as aluminium oxide or zirconium oxide, composite materials as well as polymers, especially biocompatible USP Class 6 compliant polymers, such as PEEK (polyetheretherketone), POM(polyoxymethylene), Grilamid TR 70 LX of EMS, PEI of Sulzer Medica (polyethylene imine), PTFE (polytetrafluorethylene), PP (polypropylene), PMP (polymethylpenten), PPSU (polyphenylsulfone), PE (polyethylene), and PC (polycarbonate). Preferably the implant is made of PEEK or POM.

Typically, series of x-rays are taken in order to determine where and how to position implants in the jaw bone without damaging surrounding structures such as the nerves in the lower jaw bone and the sinuses adjacent the upper jaw bone. Based on said x-ray the pilot hole is drilled in the jaw bone. If, according to a further embodiment of the present invention, the try-in implant is made of a metal or synthetic material, which is X-ray visible, a further x-ray can be taken to determine the angulation of the pilot hole relative to existing dentition and the depth of the pilot hole relative to anatomical restriction. A possible synthetic material, which is X-ray visible, is BaSO₄ containing PEEK or ZrO₂ itself. X-ray visibility of the try-implant according to the present invention permits optimal selection of the implant (one-part vs. two-part, straight or angled abutment as well as length of the implant) as well as the precision placement of implants to their maximum depth in the jaw bone to assure a maximum strength supporting for one or more dental restorations.

In one embodiment of the present invention the try-in implants can be sterilized and therefore be used several times. Alternatively, it is possible to produce the try-in implants made of a synthetic material as one-way product guaranteeing a sterile product which is highly desired by consumers due to infection risks such as HIV or hepatitis.

The invention is explained below on the basis of figures and illustrative embodiments, without in any way limiting the invention to the embodiments shown. The drawings show the following:
- Fig. 1: an implant with a crown;
- Fig. 2: a side view of a first embodiment of a try-in implant according to the invention;
- Fig. 3: a side view of a try-in implant wherein the crown-like cap is an integral part of the attachment portion
- Fig. 4: a side view of an embodiment of a try-in implant according to the invention slightly modified with respect to the embodiment of Fig. 3;
- Fig. 5: a side view of an example not forming part of the invention of a try-in implant wherein the crown-like cap is an integral part of the attachment portion
- Fig. 6: a side view of a further embodiment of a try-in implant according to the invention, wherein the handle is an integral part of the crown-like cap;
- Fig. 7: a side view of a further embodiment of a try-in implant according to the invention, wherein the crown-like cap is mounted on the attachment portion;
- Fig. 8: a side view of a further embodiment of a try-in implant according to the present invention, wherein the handle is mounted on top of the crown-like cap;
- Fig. 9: a side view of a further embodiment of a try-in implant according to the invention with an opening to prevent aspiration.

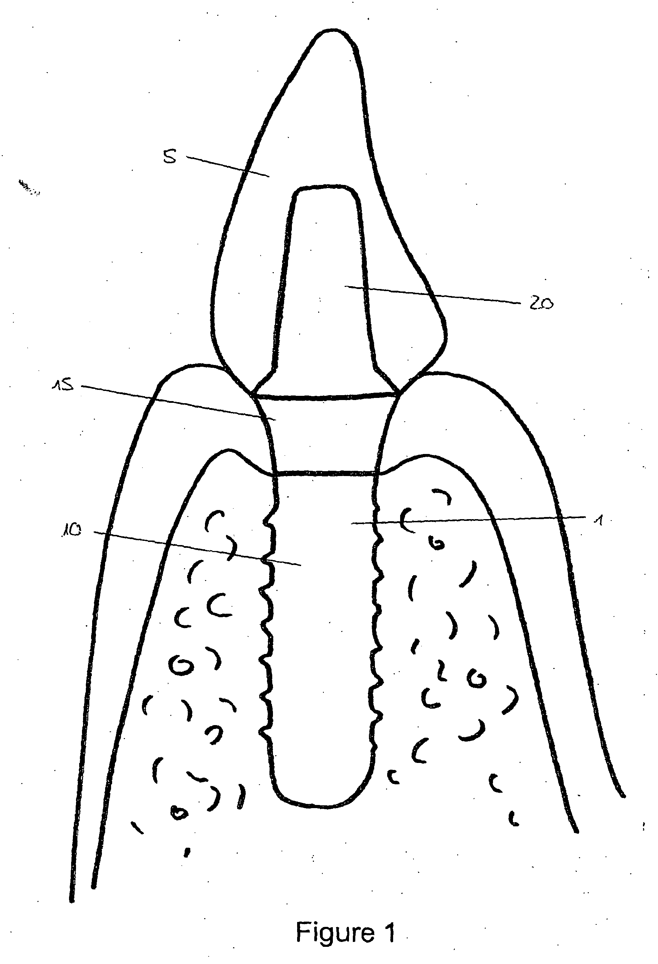

Figure 1 shows a final implant 1 with a mounted crown 5 according to the state of the art. It comprises an anchoring part 10 with a threaded section, a neck part 15 and a mounting part 20. On the mounting part 20 the crown 5 is attached.

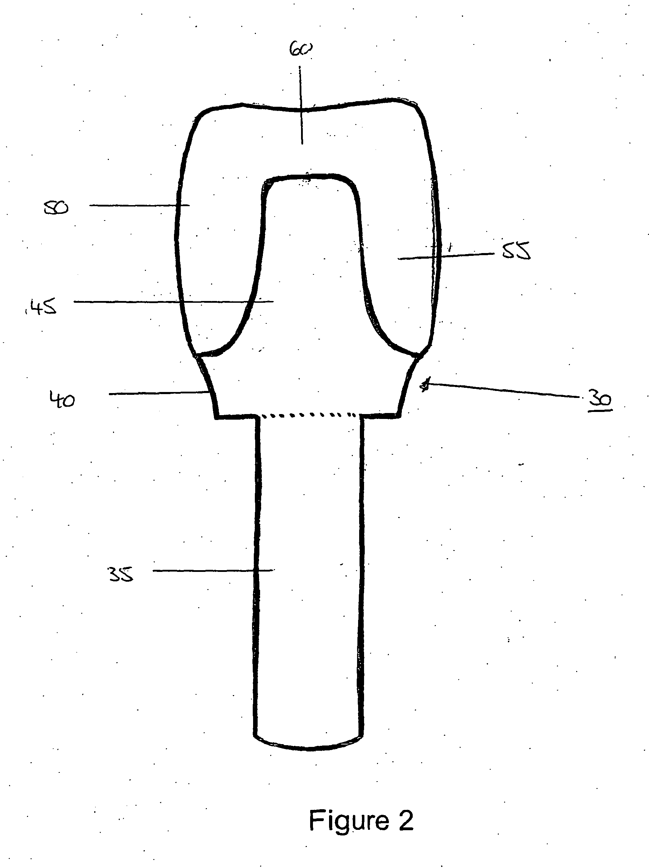

Figure 2 shows a try-in implant 30 according to the present invention. Said try-in implant 30 comprises a body portion 35 to be received in a pilot hole. The body portion 35 corresponds to the anchoring part 10 with a threaded section of the final implant. At the upper end of the body portion 35 a neck portion 40 is formed which may comprise a slightly enlarged conical section, with a sufficient length to project through mucosal tissue above the pilot hole. Above said neck portion' 40 an attachment portion 45 is formed, which corresponds to the mounting part 20 of the final implant. Said attachment portion 45 comprises a crown-like cap 50, resulting in a visual impression, which corresponds to the situation after the implantation and restoration. The crown-like cap 50 may have various forms corresponding to the different teeth, that is, the form of a premolar crown, incisor crown, rudimentary framework, generic shape etc. In figure 2 a premolar crown-like cap is shown. According to the embodiment of the present invention shown in figure 2 the crown-like cap is a separate component of the try-in implant. That means that it can be attached on the attachment portion 45 before inserting in the pilot whole. Depending on the situation in the patient's mouth the surgeon may select from crown-like caps 50 with different wall thickness, whereby said wall thickness depends on minimal framework versus complete crown and on material of crown (metal or ceramics). The wall thickness on the side 55 of the crown-like cap 50 varies from 0.3 mm to 2 mm and the wall thickness on the top 60 of the crown-like cap 50 varies from 0.8 mm to 6 mm. The try-in implant 30 is made of a biocompatible metal or synthetic material as mentioned above. Preferably it is made of PEEK or POM.

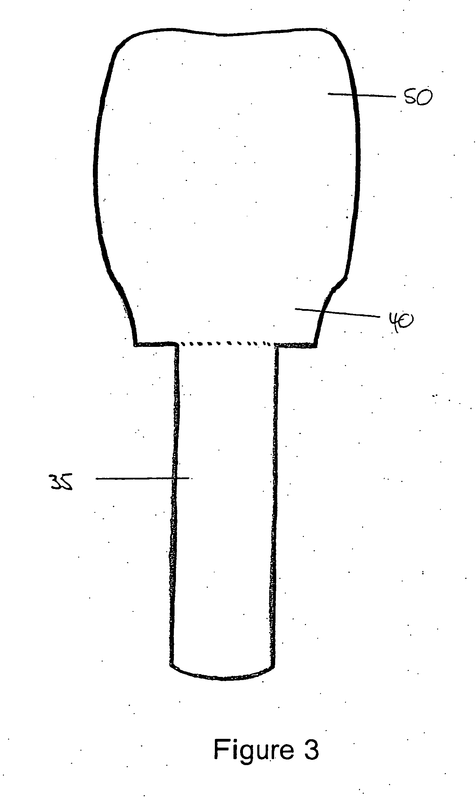

Figure 3 shows an example not forming part the present invention, which is only slightly different from that shown in figure 2. The crown-like cap 50 is an integral part of the attachment portion 45. Preferably the whole try-in implant is formed in one piece. Such a try-in implant can be produced at low cost, which is especially preferred if the try-in implant is designed as one-way product.

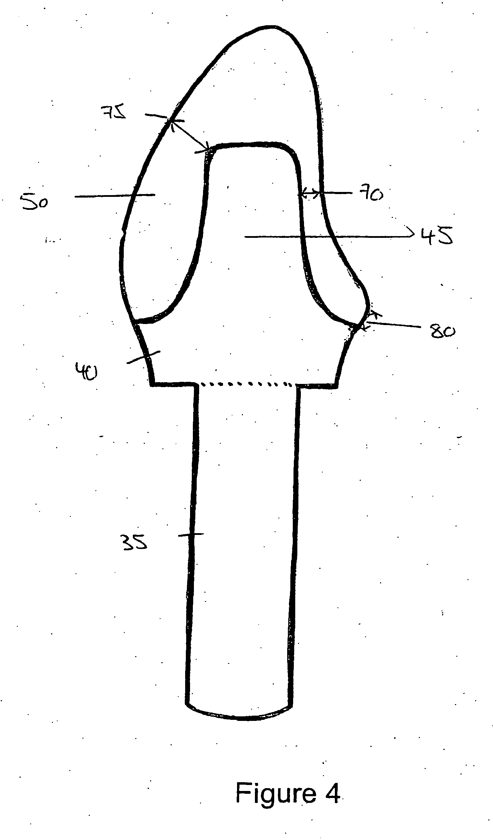

Figure 4 shows a try-in implant with an incisor crown-like cap 50. Similar to the embodiment shown in figure 2 the surgeon may select from crown-like cap 50 with different wall thickness, whereby the wall thickness on the side 70 of the crown-like cap 50 varies from 0.3 mm to 2 mm, the wall thickness 75 of the crown-like cap 50 varies from 0.5 mm to 2 mm and the wall thickness at the bottom 80 of the crown-like cap 50 varies from 0.05 to 0.5 mm.

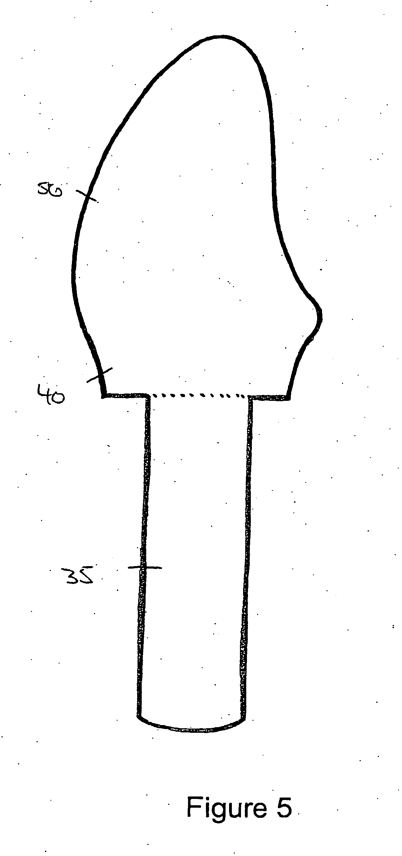

Figure 5 shows an example not forming part of the present invention, which is only slightly different from that shown in figure 4. The crown-like cap 50 is an integral part of the attachment portion 45.

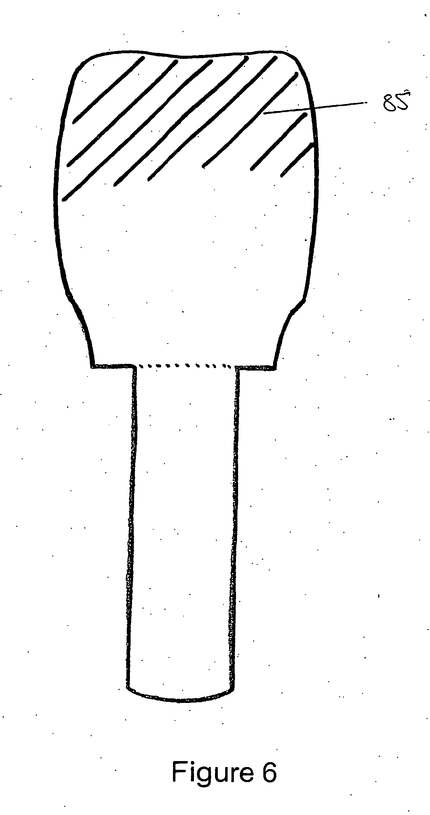

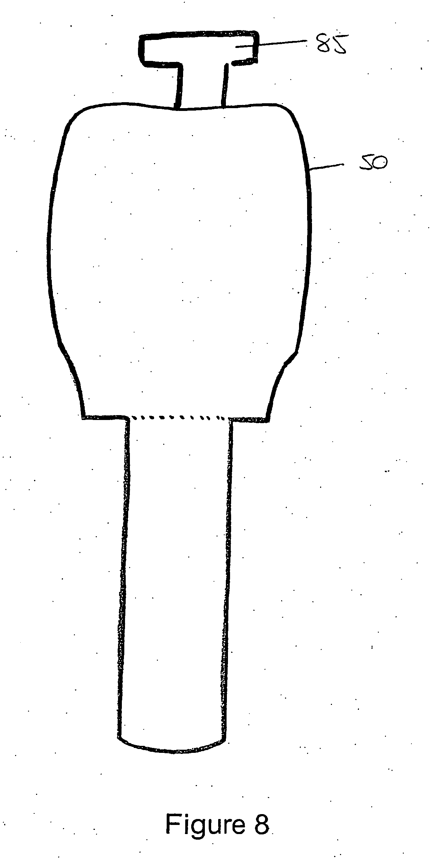

Figure 6 shows a further preferred embodiment of the present invention, wherein the crown-like cap 50, which is a separate part of the attachment portion, comprises a handle 85. The handle 85 may be an integral part of the crown-like cap 50 as shown in figure 6 or mounted on the crown-like cap 50 as shown in figure 8. Alternatively, the crown-like cap may comprise a cavity, which allows a better gripping for example by tweezers. In case the handle 85 is an integral part of the crown-like cap 50, said crown-like cap 50 has a partly or fully gripping surface. Such a try-in implant can be easily inserted in the pilot hole by hand or by tweezers without being lost in the patient's mouth, thereby ensuring a safe handling.

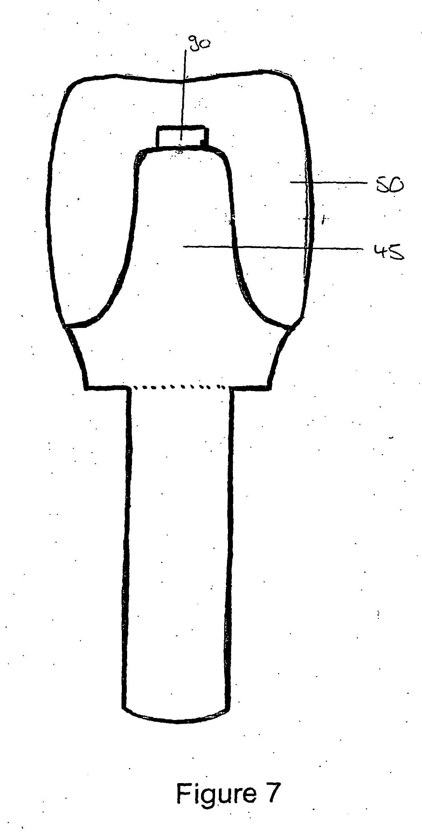

Figure 7 shows the embodiment of the present invention, wherein the crown-like cap 50 is a separate component. Said crown-like cap 50 is attached on the attachment portion by a snap-fit assembly 90 which ensures that the crown-like cap does not shift away in the patient's mouth.

Figure 8 shows a further embodiment of the present invention, wherein the handle 85 is attached on the crown-like cap 50. The handle 85 may have various forms, which can easily be gripped by hand or by tweezers, such as T-shape, triangular, rectangular, squarish, circular or semicircular. Preferably the handle 85 has a gripping surface. Alternatively the handle 85 may be integrated.

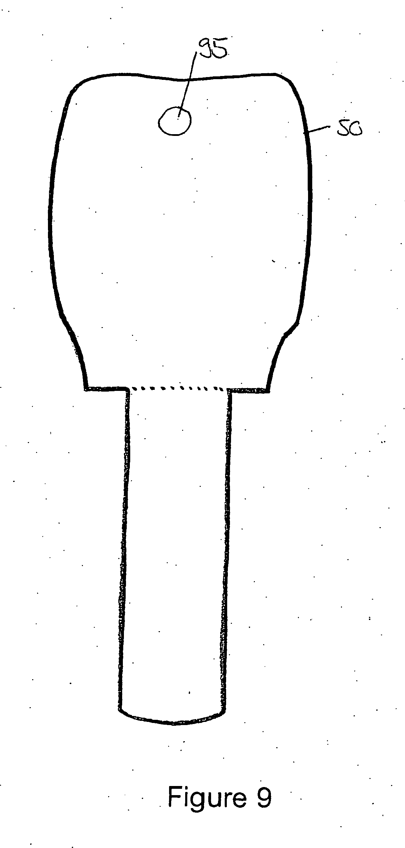

Figure 9 shows a try-in implant 30, wherein the crown-like cap 50 comprises an opening 95 for the prevention of aspiration. A thread or floss, may be inserted through the opening 20 and held outside the patient's mouth. Additionally, the thread or floss may be used to assist in removing the try-in implant in a safe and quick way. As an alternative a handle as shown in figures 6 and 8 may comprise an opening 95 for the prevention of aspiration.

## Claims

1. Try-in implant (30) for verifying position and angulation of a pilot hole, said try-in implant (30) comprising
a body portion (35) to be received in said pilot hole, a neck portion (40) formed above said body portion, an attachment portion (45) formed above said neck portion (40), the attachment portion comprising a crown-like cap, **characterized in that**
the crown-like cap (50) is mounted on the attachment portion by a snap fit assembly.

2. Try-in implant (30) according to claim 1, **characterized in that** the crown-like cap (50) comprises a handle.

3. Try-in implant (30) according to claim 2, **characterized in that** at least part of the crown-like cap (50) has a gripping surface.

4. Try-in implant (30) according to claim 2 or 3, **characterized in that** the handle (85) comprises an opening (95) for the secure retaining of the try-in implant to prevent aspiration of the try-in implant.

5. Try-in implant (30) according to claim 1, **characterized in that** the crown-like cap (50) comprises an opening (95) for the secure retaining of the try-in implant to prevent aspiration of the try-in implant.

6. Try-in implant (30) according to any of the preceding claims, **characterized in that** the attachment portion is straight or angulated with respect to the body portion.

7. Try-in implant (30) according to any of the preceding claims, **characterized in that** the body portion (35) has a length of 6 to 8 nm.

8. Try-in implant (30) according to any of the preceding claims, **characterized in that** the body portion (35) comprises height indicators.

9. Try-in implant (30) according to any of the preceding claims, **characterized in that** the body portion has a diameter from 1 to 8 mm.

10. Try-in implant (30) according to any of the preceding claims, **characterized in that** the implant is made of metal or a synthetic material.

11. Try-in implant (30) according to claim 10, **characterized in that** the implant is made of a synthetic material selected from the group consisting of ceramic, composite materials and polymers, preferably polymers selected from the group consisting of PEEK, POM, Grilamid TR 70 LX, PEI, PTFE, PP, PMP, PPSU, PE and PC.

12. Try-in implant (30) according to claim 11, **characterized in that** the implant is made of PEEK or POM.

13. Try-in implant (30) according to claim 11 or 12, **characterized in that** the synthetic material is X-ray visible.

14. Try-in implant (30) according to any of the proceeding claims, **characterized in that** it can be sterilized.

15. Try-in implant (30) according to any of the claims 11 to 13, **characterized in that** the try-in implant is a one-way product.

## Patentansprüche

1. Versuchsimplantat (30) zur Überprüfung der Position und Winkel einer Pilotbohrung, wobei besagtes Versuchsimplantat (30)
einen Körperabschnitt (35), dazu bestimmt, in besagter Pilotbohrung aufgenommen zu werden, eine oberhalb besagtem Körperabschnitt ausgeformte Halspartie (40), einen oberhalb besagter Halspartie (40) ausgeformten Aufnahmeabschnitt (45) mit einer kronenähnlichen Kappe umfasst, dadurch charakterisiert, dass
die kronenähnliche Abdeckkappe (50) auf den Aufnahmeabschnitt mittels einer Schnappverbindungsanordnung aufgesteckt ist.

2. Versuchsimplantat (30) gemäss Anspruch 1, **dadurch gekennzeichnet, dass** die kronenähnliche Kappe (50) einen Griff umfasst.

3. Versuchsimplantat (30) gemäss Anspruch 2, **dadurch gekennzeichnet, dass** mindestens ein Teil der kronenähnlichen Kappe (50) eine Greifoberfläche aufweist.

4. Versuchsimplantat (30) gemäss Anspruch 2 oder 3, **dadurch gekennzeichnet, dass** der Griff (85) eine Öffnung (95) zum sicheren Festhalten des Versuchsimplantats umfasst, um eine Aspiration des Versuchsimplantates zu vermeiden.

5. Versuchsimplantat (30) gemäss Anspruch 1, **dadurch gekennzeichnet, dass** die kronenähnliche Kappe (50) eine Öffnung (95) zum sicheren Festhalten des Versuchsimplantats umfasst, um eine Aspiration des Versuchsimplantates zu vermeiden.

6. Versuchsimplantat (30) gemäss einem der vorangehenden Ansprüche, **dadurch gekennzeichnet, dass** der Aufnahmeabschnitt gegenüber dem Körperabschnitt gerade oder gewinkelt ist.

7. Versuchsimplantat (30) gemäss einem der vorangehenden Ansprüche, **dadurch gekennzeichnet, dass** der Körperabschnitt (35) eine Länge von 6 bis 8 mm aufweist.

8. Versuchsimplantat (30) gemäss einem der vorangehenden Ansprüche, **dadurch gekennzeichnet, dass** der Körperabschnitt (35) Höhenindikatoren umfasst.

9. Versuchsimplantat (30) gemäss einem der vorangehenden Ansprüche, **dadurch gekennzeichnet, dass** der Körperabschnitt einen Durchmesser von 1 bis 8 mm aufweist.

10. Versuchsimplantat (30) gemäss einem der vorangehenden Ansprüche, **dadurch gekennzeichnet, dass** das Implantat aus Metall oder einem synthetischen Material besteht.

11. Versuchsimplantat (30) gemäss Anspruch 10, **dadurch gekennzeichnet, dass** das Implantat aus einem synthetischen Material ausgewählt aus der Gruppe bestehend aus Keramik, Kompositmaterialien und Polymeren, bevorzugt Polymeren ausgewählt aus der Gruppe bestehend aus PEEK, POM, Grilamid TR 70 LX, PEI, PTFE, PP, PMP, PPSU, PE und PC, besteht.

12. Versuchsimplantat (30) gemäss Anspruch 11, **dadurch gekennzeichnet, dass** das Implantat aus PEEK oder POM besteht.

13. Versuchsimplantat (30) gemäss Anspruch 11 oder 12, **dadurch gekennzeichnet, dass** das synthetische Material röntgensichtbar ist.

14. Versuchsimplantat (30) gemäss einem der vorangehenden Ansprüche, **dadurch gekennzeichnet, dass** es sterilisiert werden kann.

15. Versuchsimplantat (30) gemäss einem der Ansprüche 11 bis 13, **dadurch gekennzeichnet, dass** das Versuchsimplantat ein Einwegprodukt ist.

## Revendications

1. Implant d'essai fonctionnel (30) destiné à vérifier la position et l'orientation angulaire d'un trou pilote, ledit implant d'essai fonctionnel (30) comprenant :
une partie de corps (35) destinée à être reçue dans ledit trou pilote, une partie de col (40) formée au-dessus de ladite partie de corps, une partie de fixation (45) formée au-dessus de ladite partie de col (40), la partie de fixation comprenant un capuchon de type couronne, **caractérisé en ce que**
le capuchon de type couronne (50) est monté sur la partie de fixation par un assemblage par encliquetage.

2. Implant d'essai fonctionnel (30) selon la revendication 1, **caractérisé en ce que** le capuchon de type couronne (50) comprend une poignée.

3. Implant d'essai fonctionnel (30) selon la revendication 2, **caractérisé en ce qu'**au moins une partie du capuchon de type couronne (50) a une surface de préhension.

4. Implant d'essai fonctionnel (30) selon la revendication 2 ou 3, **caractérisé en ce que** la poignée (85) comprend une ouverture (95) pour retenir de manière sûre l'implant d'essai fonctionnel afin d'empêcher qu'il ne soit aspiré.

5. Implant d'essai fonctionnel (30) selon la revendication 1, **caractérisé en ce que** le capuchon de type couronne (50) comprend une ouverture (95) pour retenir de manière sûre l'implant d'essai fonctionnel afin d'empêcher qu'il ne soit aspiré.

6. Implant d'essai fonctionnel (30) selon l'une quelconque des revendications précédentes, **caractérisé en ce que** la partie de fixation est droite ou orientée angulairement par rapport à la partie de corps.

7. Implant d'essai fonctionnel (30) selon l'une quelconque des revendications précédentes, **caractérisé en ce que** la partie de corps (35) a une longueur de 6 à 8 mm.

8. Implant d'essai fonctionnel (30) selon l'une quelconque des revendications précédentes, **caractérisé en ce que** la partie de corps (35) comprend des indicateurs de hauteur.

9. Implant d'essai fonctionnel (30) selon l'une quelconque des revendications précédentes, **caractérisé en ce que** la partie de corps a un diamètre de 1 à 8 mm.

10. Implant d'essai fonctionnel (30) selon l'une quelconque des revendications précédentes, **caractérisé en ce que** l'implant est fabriqué en métal ou en matériau synthétique.

11. Implant d'essai fonctionnel (30) selon la revendication 10, **caractérisé en ce que** l'implant est fabriqué en un matériau synthétique choisi parmi le groupe constitué de matériaux céramiques, composites, et de polymères, de préférence de polymères choisis parmi le groupe constitué de PEEK, POM, Grilamid TR 70 LX, PEI, PTFE, PP, PMP, PPSU, PE et PC.

12. Implant d'essai fonctionnel (30) selon la revendication 11, **caractérisé en ce que** l'implant est fabriqué en PEEK ou en POM.

13. Implant d'essai fonctionnel (30) selon la revendication 11 ou 12, **caractérisé en ce que** le matériau synthétique est visible aux rayons X.

14. Implant d'essai fonctionnel (30) selon l'une quelconque des revendications précédentes, **caractérisé en ce qu'**il peut être stérilisé.

15. Implant d'essai fonctionnel (30) selon l'une quelconque des revendications 11 à 13, **caractérisé en ce que** l'implant d'essai fonctionnel est un produit à usage unique.
